# EUROPEAN PATENT APPLICATION

(11) **EP 4 800 362 A1**
(43) Date of publication of application: **02.09.2026**
(21) Application number: 26155291.3
(22) Date of filing: 30.01.2026
(51) Int. Cl.: G01K 7/42, H01M 10/48

(54) **SYSTEMS AND METHODS FOR TEMPERATURE PREDICTION FOR SECONDARY BATTERY**

(30) Priority: 27.02.2025 KR 20250026154
(71) Applicant: SAMSUNG SDI CO., LTD., Yongin-si, Gyeonggi-do 17084 (KR); Korea Advanced Institute of Science and Technology, Daejeon 34141 (KR)
(72) Inventor: Miran, Ryu, Yongin-si, Gyeonggi-do 17084 (KR); Lee, Bong Jae, Daejeon 34141 (KR); Han, Jihye, Daejeon 34141 (KR); Kim, Jihoon, Daejeon 34141 (KR); Joe, YeongBeom, Yongin-si, Gyeonggi-do 17084 (KR)
(74) Representative: Meissner Bolte Partnerschaft mbB

(57) **Abstract**

The present invention relates to systems (1) and method for temperature prediction for secondary battery. A system (1) may include: a storage device (11, 21, 25) configured to store a plurality of first data sets related to heat transfer of at least one battery; and a control device (13, 24, 27) configured to generate a plurality of second data sets by performing dimensionless conversion on the plurality of first data sets, and train an artificial neural network-based temperature prediction model based on the plurality of second data sets, wherein temperature of a target battery is predicted based on the artificial neural network-based temperature prediction model, and an aspect of the target battery is modified based on the temperature.

## Description

### BACKGROUND

### 1. Field

The present invention relates to systems and methods for temperature prediction for a secondary battery.

### 2. Description of the Related Art

The rechargeable battery is a battery that may be charged and discharged, unlike a primary battery that cannot be recharged. Low-capacity rechargeable batteries are used in small portable electronic devices such as smartphones, feature phones, laptop computers, digital cameras, and camcorders, and high-capacity rechargeable batteries are widely used as motor driving power and power storage devices for hybrid vehicles and electric vehicles. The rechargeable battery includes an electrode assembly including a positive electrode and a negative electrode, a case accommodating the same, and an electrode terminal connected to the electrode assembly.

Thermal runaway may occur when the battery abnormally generates heat due to an internal short circuit, an overcharge, a high temperature environment, an external impact, or the like. Occurrence of thermal runaway may lead to the ignition of the battery making the prediction of thermal runaway an important task in terms of battery safety. In predicting thermal runway, battery temperature may need to be predicted and managed to maintain battery performance and safety.

The above-described information disclosed in the background technology of this invention is only intended to enhance the understanding of the background of the present invention and therefore may include information that does not constitute prior art.

### SUMMARY

Embodiments of the present invention are directed to systems and methods for temperature prediction for a secondary battery that includes constructing a temperature prediction model and predicting temperature changes in the battery based on the temperature prediction model.

However, the technical problem to be solved by the present invention is not limited to the above-described problem, and other tasks not mentioned may be clearly understood by those skilled in the art from the description of the invention described below.

The present invention relates to a system that includes: a storage device configured to store a plurality of first data sets related to heat transfer of at least one battery; and a control device configured to generate a plurality of second data sets by performing dimensionless conversion on the plurality of first data sets, and train an artificial neural network-based temperature prediction model based on the plurality of second data sets. A temperature of a target battery is predicted based on the artificial neural network-based temperature prediction model, and an aspect of the target battery may be modified based on the temperature.

At least one of the plurality of first data sets may include at least one of heat generation data, temperature data, or system environment data of the at least one battery. At least one of the plurality of second data sets may include at least one of dimensionless heat generation data, dimensionless temperature data, or a dimensionless number.

The system may be further configured to generate the heat generation data based on a current profile.

The system may be further configured to: perform numerical analysis or simulation of the at least one battery based on the heat generation data of the at least one battery; and generate the temperature data via the numerical analysis or the simulation.

The system may be further configured to generate the plurality of first data sets by modifying the current profile via a random sampling.

The system may be further configured to generate the dimensionless number based on the system environment data. The system environment data may include at least one of internal thermal conductivity, surface convection heat transfer coefficient, external temperature, or shape information of the at least one battery. The dimensionless number may include a Biot Number.

The present invention relates to a system that includes: a storage device configured to store a temperature prediction model based on an artificial neural network, and a control device configured to obtain a first dimensionless heat generation value and a first dimensionless temperature value by performing dimensionless conversion on a heat generation value and a temperature value of a battery at a first time point, obtain a first dimensionless prediction temperature value at a second time point by inputting the first dimensionless heat generation value and the first dimensionless temperature value into the temperature prediction model, and determine a first prediction temperature value at the second time point by performing conversion on the first dimensionless prediction temperature value to an original dimension, wherein an aspect of a target battery is modified based on the first prediction temperature value.

The system may be further configured to obtain the heat generation value based on a current profile of the battery.

The system may be further configured to: based on the current profile, obtain a plurality of time indexes defined at identified time intervals and a plurality of heat generation value corresponding to the plurality of time indexes; obtain a plurality of dimensionless heat generation value by performing dimensionless conversion on the plurality of heat generation values; sequentially input the plurality of dimensionless heat generation value into the temperature prediction model to obtain a plurality of dimensionless prediction temperature values corresponding to the plurality of time indexes; and generate a prediction temperature profile of the battery by performing conversion on the plurality of dimensionless prediction temperature values to an original dimension.

The system may be further configured to obtain a second dimensionless prediction temperature value at a third time point by inputting the second dimensionless heat generation value and the second dimensionless temperature value at the second time point into the temperature prediction model, and determine a second prediction temperature value at the third time point by performing conversion on the second dimensionless prediction temperature value to the original dimension.

The second dimensionless temperature value may be the first dimensionless prediction temperature value. Based on the first time point being an initial time point, the first dimensionless temperature value corresponds to an initial temperature of the battery.

The temperature prediction device may further include a measuring device configured to measure current and temperature of the battery. The control device may be further configured to determine the heat generation value based on the current value measured at the first time point.

The system may be further configured to obtain at least one dimensionless number input to the temperature prediction model from system environment data of the battery.

The present invention relates to a temperature prediction method of a battery. The temperature prediction method includes: obtaining a first dimensionless heat generation value and a first dimensionless temperature value by dimensionless conversion a heat generation value and a temperature value of the battery at a first time point; obtaining a first dimensionless prediction temperature value at a second time point by inputting the first dimensionless heat generation value and the first dimensionless temperature value into an artificial neural network-based temperature prediction model; and determining a first prediction temperature value at the second time point by performing conversion on the first dimensionless prediction temperature value to an original dimension, wherein an aspect of a target battery is modified based on the first prediction temperature value.

The temperature prediction method may further include obtaining the heat generation value based on the current profile of the battery.

The temperature prediction method may further include: obtaining a second dimensionless prediction temperature value at a third time point by inputting a second dimensionless heat generation value and a second dimensionless temperature value at the second time point into the temperature prediction model; and determining the second prediction temperature value at the third time point by performing conversion on the second dimensionless prediction temperature value to the original dimension.

The second dimensionless temperature value may be the first dimensionless prediction temperature value. Based on the first time point being an initial time point, the first dimensionless temperature value corresponds to an initial temperature of the battery.

The temperature prediction method may further include determining the heat generation value based on the current value measured from the battery at a first point in time.

The temperature prediction method may further include: generating a plurality of second data sets by performing dimensionless conversion on the plurality of first data sets related to heat transfer of at least one sample battery; and training the temperature prediction model based on the plurality of second data sets. One or more of the plurality of first data sets may include at least one of heat generation data, temperature data, and system environment data of a corresponding sample battery. At least one of the plurality of second data sets may include at least one of dimensionless heat generation data, dimensionless temperature data, or dimensionless number.

The temperature prediction method may further include: generating the heat generation data based on the current profile of the at least one sample battery; and generating the temperature data by performing a numerical analysis or simulation of the at least one sample battery based on the heat generation data of the at least one sample battery.

The temperature prediction method may further include generating the dimensionless number based on the system environment data. The system environment data may include at least one of internal thermal conductivity, surface convection heat transfer coefficient, external temperature, or shape information of the at least one sample battery. The dimensionless number may include a Biot number.

The temperature prediction method may further include displaying the first prediction temperature value on a screen.

According to the present invention, when constructing a temperature prediction model of a battery, a calculation load for constructing the temperature prediction model and time required for constructing the temperature prediction model may be shortened.

However, the effects obtainable through the present invention are not limited to the effects described above, and other technical effects not mentioned will be clearly understood by those skilled in the art from the description of the invention described below.

### BRIEF DESCRIPTION OF THE DRAWINGS

The following drawings attached to the present specification illustrate preferred embodiments of the present invention and serve to further understand the technical idea of the present invention together with the detailed description of the invention to be described below, and thus the present invention should not be construed as being limited only to the matters set forth in the drawings.
FIG. 1 depicts a block diagram of a battery temperature prediction system according to one embodiment.
FIG. 2 depicts a block diagram of a temperature prediction model construction device according to one embodiment.
FIG. 3 depicts another block diagram of a temperature prediction model construction device according to an embodiment.
FIG. 4 depicts a block diagram of a temperature prediction device according to one embodiment.
FIG. 5 depicts another block diagram of a temperature prediction device according to an embodiment.
FIG. 6 depicts a flow diagram of a method for constructing a temperature prediction model according to one embodiment.
FIG. 7 depicts another flow diagram of a method for constructing a temperature prediction model according to an embodiment.
FIG. 8 depicts a flow diagram of a temperature prediction method according to one embodiment.
FIG. 9 depicts another flow diagram of a temperature prediction method according to one embodiment.

### DETAILED DESCRIPTION

Hereinafter, embodiments of the present invention will be described in detail with reference to the accompanying drawings. Prior to this, terms or words used in this specification and claims should not be interpreted as limited to their usual or dictionary meanings, and should be interpreted to encompass meanings and concepts that conform to the technical idea of the present invention based on the principle that an inventor can be his own lexicographer to properly define the concepts of the terms in order to explain his or her own invention in the best way.

The embodiments described in this specification and the configurations illustrated in the drawings are only some of the embodiments of the present invention and do not represent all of the technical ideas of the present invention, and it should be understood that there may be various equivalents and modified examples that may replace them at the time of filing this application.

The terminology used herein is for the purpose of describing embodiments of the present invention and is not intended to be limiting of the present invention. As used herein, the singular forms "a" and "an" are intended to include the plural forms as well, unless the context clearly indicates otherwise. Also, as used in this specification, the terms "comprise" "include" and/or "comprising", "including" specify the presence of stated shapes, numbers, steps, operations, members, elements, and/or groups thereof, but do not preclude the presence or addition of one or more other shapes, numbers, steps, operations, members, elements, and/or groups thereof. In addition, when describing embodiments of the present invention, "~can be", "~may be" may include "one or more embodiments of the present invention".

In addition, in order to help understand the invention, the dimensions of some components may be exaggerated rather than the attached drawings shown at the actual scale. In addition, the same reference numbers may be assigned to the same components in different embodiments.

A reference to two items being "identical" or "the same" means that they are "substantially identical" or "substantially the same." In some embodiments, substantial equivalence may include cases with deviations considered minor within the industry, such as deviations within 5%. Also, the fact that any parameter is uniform in an identified region may mean that the parameter is uniform from an average viewpoint.

It will be understood that, although the terms first, second, etc. may be used herein to describe various elements, these elements should not be limited by these terms. These terms are only used to distinguish one component from another, and unless otherwise stated, the first component may be a second component.

Throughout the specification, each component may be singular or plural unless specifically opposed to the description.

The arrangement of any configuration in the "upper part (or lower part) " or "on (or below)" of a component may mean that any configuration is disposed in contact with the top surface (or bottom surface) of the component, as well as other configurations may be interposed between the component and any configuration disposed on (or under) the component.

It should also be understood that if a component is stated to be "coupled," "combined" or "connected" to another component, the components may be directly connected or connected to each other, but other components may be "interposed" between each component, or each component may be "coupled," "combined" or "connected" through another component. In addition, when a part is referred to as being electrically coupled to another part, it includes not only a case in which the part is directly connected, but also a case in which other elements are connected to each other with another element interposed therebetween.

Throughout the specification, when referred to as " A and/or B, " this means A, B, or A and B residues unless otherwise specified. That is, "and/or" includes any and all combinations of a plurality of items listed. When we say "C to D" we mean C or more and D or less, unless otherwise specified.

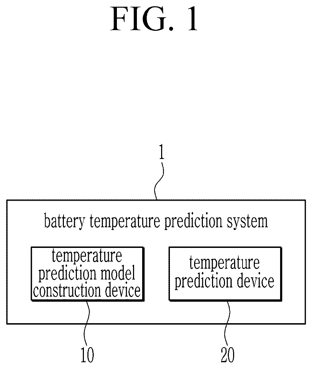

FIG. 1 depicts a block diagram of a battery temperature prediction system, according to one embodiment.

Referring to FIG. 1, a battery temperature prediction system 1 may include a temperature prediction model construction device 10 and a temperature prediction device 20.

The temperature prediction model construction device 10 may construct an artificial neural network-based temperature prediction model for predicting the temperature of a battery. The temperature prediction device 20 may predict the temperature of the target battery based on the temperature prediction model built by the temperature prediction model construction device 10.

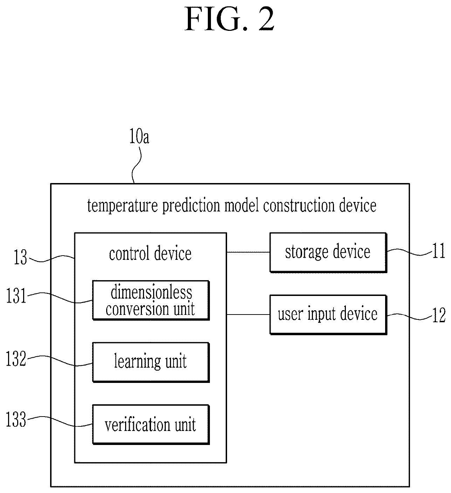

Hereinafter, the temperature prediction model construction device 10 and the temperature prediction device 20 will be described in detail with reference to FIGS. 2 to 5.

FIG. 2 depicts a block diagram of a temperature prediction model construction device according to one embodiment.

Referring to FIG. 2, a temperature prediction model construction device 10a according to one embodiment may include a storage device 11, a user input device 12, and a control device 13.

The storage device 11 may store various types of information, data, etc. processed in the temperature prediction model construction device 10a. For example, the storage device 11 may store a data set (hereinafter referred to as "original data set") related to heat transfer of the sample battery, such as heat generation data, temperature data, and/or system environment data of a sample battery. The heat generation data may include a heat generation profile. The heat generation profile may include time series data representing a change in the heat generated inside the battery over time due to driving (charging or discharging) of the sample battery. The heat generation profile may include time indexes (time point information) defined at identified or predetermined time intervals (e.g., 50 seconds) and a heat generation value corresponding to one or more (e.g., each) time index. The temperature data may include a temperature profile for at least one region of a corresponding sample battery. A temperature profile may include time series data representing temperature changes over time in a corresponding area. A temperature profile may include time indexes defined at identified or predetermined time intervals (e.g., 50 seconds) and temperature values corresponding to one or more (e.g., each) time index.

System environment data may include system environmental variables that affect temperature changes of the sample battery. System environment data may include thermal conductivity, which represents heat transfer performance within a sample battery, convective heat transfer coefficient, which represents the rate of convective heat transfer between at least one surface of the sample battery and the surrounding environment, and the like. System environment data may include the initial temperature of the sample battery, the external temperature (or ambient temperature), and shape information of the battery (shape factor). Shape information may include size information, etc. for the battery

The storage device 11 may store a plurality of different original data sets for one sample battery. Even for the same battery, if the battery's driving data changes, the heat generation profile may change, which may also cause the temperature profile to change. Accordingly, the storage device 11 may store multiple original data sets corresponding to different driving data for one sample battery. Additionally, even for the same battery, the temperature profile may vary depending on environmental variables. Accordingly, the storage device 11 may store multiple original data sets corresponding to different system environment data for one sample battery.

The storage device 11 may also store original data sets of multiple different sample batteries.

The original data sets stored in the storage device 11 may be those obtained in advance through experiments, numerical analysis, simulations, or the like, for the at least one sample battery, and then stored in the storage device 11.

The storage device 11 may store data sets (hereinafter, referred to as "dimensionless data sets") obtained by performing dimensionless conversion (e.g., non-dimensionalization conversion) on the original data sets. In this regard, the original data sets are converted into a dimensionless data set. One or more (e.g., each) dimensionless data set may include dimensionless heat generation data, dimensionless temperature data, and at least one dimensionless number. Dimensionless heat generation data may include a dimensionless heat generation profile. The dimensionless heat generation profile may include time indexes (the same as the heat generation profile before dimensionless conversion) defined at identified or predetermined time intervals and dimensionless heat generation corresponding to one or more (e.g., each) time index. The dimensionless temperature data may include at least one dimensionless temperature profile. A dimensionless temperature profile may include time indexes defined at identified or predetermined time intervals (same as the temperature profile before dimensionless conversion) and dimensionless temperature values corresponding to one or more (e.g., each) time index. A dimensionless number may be used to represent the relationship between the thermal conductivity inside a sample battery and the surface of the sample battery as a unitless number. The dimensionless number may include a Biot number (or a Nusselt number).

In some embodiments, the storage device 11 may store a temperature prediction model described later. In some embodiments, saving a temperature prediction model includes saving the data that constitutes the temperature prediction model.

The storage device 11 may store a program or instructions for the operation of the control device 13.

The user input device 12 may receive input data from the user to control the operation of the temperature prediction model construction device 10a.

The control device 13 may control the overall operation of the temperature prediction model construction device 10a. The control device 13 may perform dimensionless conversion of the original data sets stored in the storage device 11 and may train an artificial neural network-based temperature prediction model based on the dimensionless processed dimensionless data sets.

The control device 13 may include a dimensionless conversion unit 131, a learning unit 132, and a verification unit 133. In some embodiments, the dimensionless conversion unit 131, the learning unit 132, and the verification unit 133 may be implemented via software, firmware, hardware, or a combination of software, firmware, and/or hardware.

The dimensionless conversion unit 131 may obtain dimensionless data sets by performing dimensionless conversion on the original data sets stored in the storage device 11. In some embodiments, performing dimensionless conversion includes the process of removing units (or dimensions) from physical variables and converting them into dimensionless variables.

The dimensionless conversion unit 131 may calculate the dimensionless heat generation (Π(t)) using the following Equation 1. $Π \left(t\right) = \frac{{L}^{2} q \left(t\right)}{k \left({T}_{0}-{T}_{∞}\right)}$

In Equation 1, q(t) may represent the heat generation of the sample battery, k can represent the thermal conductivity inside the sample battery, L may represent the characteristic length of the sample battery, T₀ may represent the initial temperature of the sample battery, T_{∞} may represent the external temperature of the sample battery, and t may represent the time index. The characteristic length (L) is a length scale that reflects the heat transfer characteristics of the sample battery, and may be calculated based on the surface area, volume, thickness, etc. of the sample battery. The time index t may indicate corresponding time point information, that is, a time point at which a dimensionless heat generation is a dimensionless heat generation.

The dimensionless conversion unit 131 may use Equation 1 to individually dimensionless-process the heat generation values q(t) included in the heat generation data, thereby obtaining dimensionless heat generation data. The dimensionless heat generation data may include time indexes defined at identified or predetermined time intervals and a dimensionless heat generation value Π(t) corresponding to one or more (e.g., each) time index.

The dimensionless conversion unit 131 may calculate the dimensionless number Bi using Equation 2 below. $Bi = hL / k$

In Equation 2, k represents the thermal conductivity in the sample battery, L represents the characteristic length of the sample battery, and h represents the convective heat transfer coefficient on the surface of the sample battery.

The dimensionless conversion unit 131 may calculate a plurality of dimensionless numbers using Equation 2. Depending on how the cooling system is configured, the convective heat transfer coefficient on one or more (e.g., each) surface of the battery may vary. For example, if the sample battery is of a square type and the cooling system is positioned so as to be in contact only with the rear surface of the sample battery, the convective heat transfer coefficient on the rear surface of the sample battery and the convective heat transfer coefficient on the surfaces other than the rear surface may be different. Accordingly, the system environment data may include multiple convective heat transfer coefficients, in which case the dimensionless conversion unit 131 may obtain multiple dimensionless numbers corresponding to the multiple convective heat transfer coefficients.

The dimensionless conversion unit 131 may calculate the dimensionless temperature (θ(t)) using the following Equation 3. $θ \left(t\right) = \frac{T \left(t\right) - {T}_{∞}}{\left({T}_{0}-{T}_{∞}\right)}$

In Equation 3, T₀ represents the initial temperature of the sample battery, T_{∞} represents the external temperature of the sample battery, t represents a time index, and T(t) represents the current temperature at time t.

The dimensionless conversion unit 131 may use Equation 3 to dimensionless-process the temperature value T(t) included in the temperature data, thereby obtaining dimensionless temperature data. Dimensionless temperature data may include time indexes (t) defined at identified or predetermined time intervals and dimensionless temperature values (θ(t)) corresponding to one or more (e.g., each) time index.

When dimensionless data sets are acquired, the dimensionless conversion unit 131 my store the acquired dimensionless data sets in a storage device 11.

The learning unit 132 may select some of the dimensionless data sets stored in the storage device 11 as learning data sets. The learning unit 132 may learn an artificial neural network-based temperature prediction model using the selected learning data sets. The temperature prediction model may be configured to predict and output a dimensionless temperature value at a next point in time when a dimensionless heat generation value and a dimensionless temperature value corresponding to a current point in time and at least one dimensionless number are input. The learning unit 132 may input dimensionless heat generation values, dimensionless temperature values, and dimensionless numbers of one or more (e.g., each) learning data set into the temperature prediction model in time sequence (e.g., sequentially in time). Accordingly, the temperature prediction model may output the dimensionless prediction temperature values in chronological order. The learning unit 132 may compare the dimensionless prediction temperature value with the dimensionless temperature value included in the learning data set whenever the dimensionless prediction temperature value is output from the temperature prediction model and train the temperature prediction model so that the predicted loss calculated as the comparison result converges within an identified or predetermined range. That is, the learning unit 132 inputs the dimensionless temperature value at time t1 (θ(t1)), the dimensionless heat generation value at time t1 (Π(t1)), and the dimensionless number into the temperature prediction model, and the temperature prediction model outputs a dimensionless prediction temperature value at time t2 (θ'(t2)) in response thereto, among the dimensionless temperature values included in the corresponding learning data set. The dimensionless temperature value θ(t2) at time t2 is compared with the dimensionless prediction temperature value θ'(t2) to calculate a prediction loss, and one or more weights of the temperature prediction model can be updated so that the calculated prediction loss is reduced within an identified or a predetermined range.

The learning unit 132 may complete training of the temperature prediction model using one or more (e.g., all) learning data sets or may end training of the temperature prediction model when the prediction loss of the temperature prediction model converges within an identified or a predetermined range. In addition, the learning unit 132 may store the completed temperature prediction model in the storage device 11.

The temperature prediction model may be implemented as a Long Short-Term Memory LSTM based machine learning model capable of time series prediction.

The verification unit 133 may select one or more of the dimensionless data set stored in the storage device 11 as verification data sets. The verification unit 133 may verify the temperature prediction model using the selected verification data sets. The verification unit 133 inputs one or more (e.g., each) verification data set to the temperature prediction model, compares the dimensionless prediction temperature value output from the temperature prediction model with the dimensionless temperature value included in the verification data set to calculate a prediction loss, and may verify the prediction performance of the temperature prediction model based on the calculated prediction loss. The method of calculating the prediction loss by the verification unit 133 may be performed in a similar manner as the method in which the learning unit 132 calculates the prediction loss in the training process. When the performance of the temperature prediction model does not satisfy an identified or a predetermined level (e.g., when the prediction loss is out of an identified or a predetermined range), the verification unit 133 may control the learning unit 132 to iteratively or continuously train the temperature prediction model. When the performance of the temperature prediction model satisfies an identified or a predetermined level (e.g., when the prediction loss converges within an identified or a predetermined range), the verification unit 133 may terminate the verification of the temperature prediction model and store the verified temperature prediction model in the storage device 11.

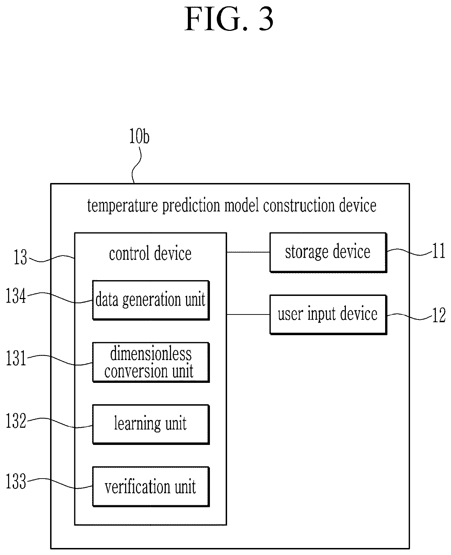

FIG. 3 depicts another block diagram of a temperature prediction model construction device according to an embodiment.

The temperature prediction model construction device 10b of FIG. 3 may further include a data generation unit 134 coupled to the temperature prediction model construction device 10a of FIG. 2. In order to avoid redundant descriptions, descriptions of components constituting the temperature prediction model construction device 10b of FIG. 3 overlapping the temperature prediction model construction device 10a of FIG. 2 are omitted below.

The data generation unit 134 may generate driving data of the sample battery. The driving data may include a profile of flow of electric charge (e.g., current) representing a current change over time of the sample battery. The current profile may include time series data including time indexes defined at identified or predetermined time intervals and current values corresponding to one or more (e.g., each) time index. The driving data may include a state of charge (SOC) profile representing SOC change over time of the sample battery. The charge state profile may include time series data including time indexes defined at identified or predetermined intervals and SOC values corresponding to one or more (e.g., each) time index. The data generation unit 134 may generate driving data based on information input through the user input device 12 or may randomly generate driving data.

The data generation unit 134 may convert the driving data into heat generation data of the sample battery. The data generation unit 134 may convert one or more (e.g., each) current value included in the driving data into a heat generation value using Joule's Law or the like, and match one or more (e.g., each) heat generation value with a corresponding time index to generate heat generation data which is time series data.

The data generation unit 134 may generate system environment data. The system environment data may include information on variables that affect the thermal environment of the sample battery, such as shape information of the sample battery, initial temperature, external temperature, internal thermal conductivity, and surface convection heat transfer coefficient. The data generation unit 134 may generate system environment data based on information input through the user input device 12.

The data generation unit 134 may perform a simulation or numerical analysis of heat transfer of the sample battery based on the heat generation data and the system environment data of the sample battery. The data generation unit 134 may obtain a temperature profile for at least one area of the sample battery through the simulation or numerical analysis and generate temperature data including the generated at least one temperature profile. The data generation unit 134 may also generate the above-described original data set using the obtained temperature data, corresponding heat generation data, and system environment data.

The data generation unit 134 may generate a plurality of original data sets for one sample battery by performing simulation or numerical analysis using a plurality of different driving data. The data generation unit 134 may use Latin Hypercube sampling LHS when generating driving data. Latin hypercube sampling is one of the random sampling methods that randomly generate samples (e.g., driving data) and may be used to uniformly extract samples within a given range. The data generation unit 134 may generate driving data such that the current change pattern of the current profiles has a uniform distribution within a given range.

The data generation unit 134 may obtain original data sets by performing simulation or numerical analysis on a plurality of sample batteries.

The original data sets generated by the data generation unit 134 may be used for training and verification of the temperature prediction model after dimensionless conversion.

When the prediction performance of the temperature prediction model evaluated through the verification process does not satisfy an identified or a predetermined level, the verification unit 133 may control the data generation unit 134 to additionally generate original data sets. In some embodiments, the verification unit 133 may control the dimensionless conversion unit 131 to perform dimensionless conversion on the additionally generated original data sets and control the learning unit 132 to perform re-learning of the temperature prediction model using the newly generated dimensionless data sets. Also, the verification unit 133 may re-verify the retrained temperature prediction model. These processes may be repeatedly performed until the performance of the temperature prediction model satisfies an identified or a predetermined level.

In the temperature prediction model construction devices 10a and 10b, the control device 13 may include at least one processor for performing at least one function of the dimensionless conversion unit 131, the learning unit 132, the verification unit 133, and the data generation unit 134. A processor may refer to a data processing device having a physically structured circuit to perform a function expressed by a code or command included in a program, such as a microprocessor, a central processing unit CPU, a processor core, a multiprocessor, an application-specific integrated circuit ASIC, a field programmable gate array FPGA, etc.

In the temperature prediction model construction devices 10a and 10b, the storage device 11 may include at least one memory. The memory is a recording medium readable by a computing device and may include various types of volatile or non-volatile recording media. The memory may include various types of recording media such as flash memory type, hard disk type, card type (e.g., SD or XD memory), random access memory RAM, static random-access memory SRAM, read-only memory ROM, electrically erasable programmable read-only memory EPROM, and/or programmable read-only memory PROM.

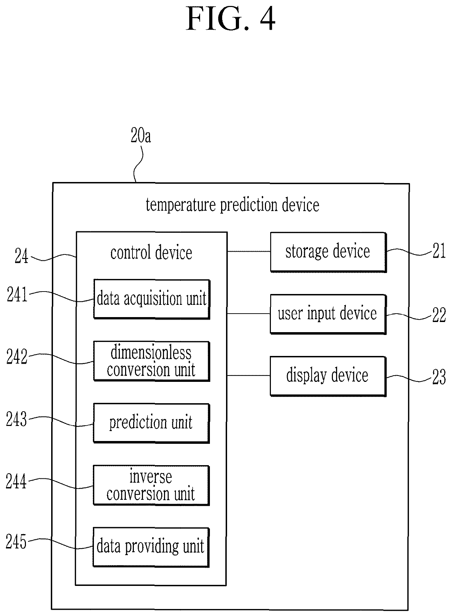

FIG. 4 depicts a block diagram of a temperature prediction device according to an embodiment.

Referring to FIG. 4, a temperature prediction device 20a according to an embodiment may predict a temperature change of the target battery from driving data of the target battery. The temperature prediction device 20a may include a storage device 21, a user input device 22, a display device 23, and a control device 24.

The storage device 21 may store various information and data processed by the temperature prediction device 20a. The storage device 21 may store driving data (e.g., current profile, charge state profile, etc.) of the target battery. The storage device 21 may store data related to heat transfer of the target battery, such as system environment data (e.g., initial temperature, external temperature, shape information, thermal conductivity, convective heat transfer coefficient, etc.), and heat generation data. The storage device 21 may store dimensionless heat generation data, a dimensionless number (e.g., a Biot number), and the like generated through dimensionless conversion.

The storage device 21 may store a temperature prediction model. The temperature prediction model may be an artificial neural network model that has been trained in the temperature prediction model construction device 10a or 10b described above. The temperature prediction model may be constructed by the temperature prediction model construction device 10a or 10b and then stored in the storage device 21 by one or more methods (e.g., replication, download, etc.).

The storage device 21 may store a program or instructions for the operation of the control device 24.

The display device 23 may display various information and data processed by the temperature prediction device 20 on the screen.

The control device 24 may control the overall operation of the temperature prediction device 20. When the driving data of the target battery is input, the control device 24 may generate a temperature profile of the target battery using the input driving data and a temperature prediction model.

The control device 24 may include a data acquisition unit 241, a dimensionless conversion unit 242, a prediction unit 243, an inverse conversion unit 244, and a data providing unit 245.

The data acquisition unit 241 may generate driving data and system environment data of the target battery based on information input through the user input device 22. The driving data may store a current profile indicating a current change pattern over time of the target battery, a charge state profile indicating a charge state change pattern over time of the target battery, and/or the like. The system environment data may include information on variables that affect the thermal environment of the target battery, such as shape information of the target battery, initial temperature, external temperature, internal thermal conductivity, and/or convective heat transfer coefficient.

The data acquisition unit 241 may generate heat generation data of the target battery from driving data by using Joule's Law or the like. The heat generation data may be a time series data representing a heat generation change pattern over time of the target battery, and may include time indexes defined at identified or predetermined time intervals and a heat generation value corresponding to one or more (e.g., each) time index.

The dimensionless conversion unit 242 may perform dimensionless conversion on the original data set (e.g., heat generation data, system environment data, etc.) acquired by the data acquisition unit 241. The dimensionless conversion unit 242 may convert the heat generation data into dimensionless heat generation data using Equation 1. The dimensionless conversion unit 242 may generate dimensionless numbers from system environment data using Equation 2. The dimensionless conversion unit 242 may obtain a dimensionless initial temperature value from the initial temperature of the target battery using Equation 3.

The prediction unit 243 may obtain dimensionless prediction temperature data (e.g., a dimensionless temperature profile) by inputting dimensionless data sets (e.g., dimensionless heat generation value, dimensionless temperature value, and/or dimensionless number) to the temperature prediction model. The dimensionless heat generation value input to the temperature prediction model may be selected in chronological order from among dimensionless heat generation values included in the dimensionless heat generation data. The dimensionless temperature value input to the temperature prediction model may be used as the dimensionless initial temperature value at the initial input, and then the dimensionless prediction temperature value predicted by the temperature prediction model may be fed back and used. In some embodiments, the prediction unit 243 inputs the dimensionless temperature value θ(t1) at time t1, the dimensionless heat generation value Π(t1), and the dimensionless number at time t1 to the temperature prediction model to obtain the dimensionless prediction temperature value θ'(t2) at time t2. At the next prediction, the dimensionless prediction temperature value θ'(t2) at time t2, the dimensionless heat generation value Π(t2), and the dimensionless number at time t3 may be input to the temperature prediction model to obtain the dimensionless prediction temperature value θ'(t3) at time t3.

The inverse conversion unit 244 may perform re-dimensionalization (or dimensionally restoration) the dimensionless prediction temperature values predicted and output by the temperature prediction model. Performing re-dimensional conversion (or dimensional restoration) means restoring or converting a dimensionless variable to its original dimensions (or units). The inverse conversion unit 244 may perform re-dimensional conversion on the dimensionless prediction temperature values output from the temperature prediction model and convert them into predicted temperature values having the original units or original dimensions (e.g., Kelvin [K] values). The inverse conversion unit 244 may generate predicted temperature data of the target battery by arranging the obtained predicted temperature values in chronological order. The predicted temperature data may include at least one predicted temperature profile. The predicted temperature profile may be time series data indicating a temperature change pattern over time in a corresponding region, and may include time indexes defined at identified or predetermined time intervals and predicted temperature values corresponding to one or more (e.g., each) time index. When there are a plurality of dimensionless numbers input to the temperature prediction model, the temperature prediction model may output dimensionless prediction temperature values corresponding to different regions of the target battery according to the plurality of dimensionless numbers. In this case, the inverse conversion unit 244 may classify the inverse-converted predicted temperature values for each corresponding area and separately generate a predicted temperature profile for each area.

When the reverse conversion is completed, inverse conversion unit 244 may store the predicted temperature data of the target battery in the storage device 21.

Once the predicted temperature data of the target battery has been obtained, the data providing unit 245 may use it to display information about the temperature profile of the target battery on the screen of the display device 23. For example, the data providing unit 245 may display the temperature profile of the target battery on the screen in the form of a graph representing a temperature change over time.

The temperature prediction device 20a may be implemented in the form of a server that provides information to a user terminal (not shown). In this case, the temperature prediction device 20a may communicate with the user terminal through various methods. In some embodiments, the data acquisition unit 241 may generate driving data and system environment data of the target battery based on information received from the user terminal. In some embodiments, the data providing unit 245 may provide the predicted temperature data of the target battery to the user terminal. That is, the data providing unit 245 may transmit data including predicted temperature data of the target data to the user terminal. The user terminal receiving this may display the temperature profile of the target battery on the screen in the form of a graph representing a temperature change over time using the received data.

In the temperature prediction device 20a, the control device 24 may include at least one processor for performing at least one function of the data acquisition unit 241, the dimensionless conversion unit 242, the prediction unit 243, the inverse conversion unit 244, and the data providing unit 245. The storage device 21 may include at least one memory including, for example, a flash memory, hard disk, memory card, (e.g., SD or XD memory), random access memory RAM, static random-access memory SRAM, read-only memory ROM, electrically erasable programmable read-only memory EPROM, and/or programmable read-only memory PROM.

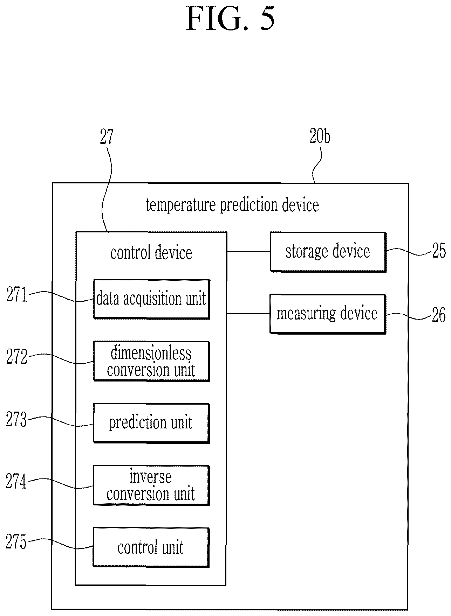

FIG. 5 depicts another diagram of a temperature prediction device according to an embodiment.

Referring to FIG. 5, a temperature prediction device 20b according to an embodiment may predict a temperature change of the target battery in advance based on a temperature value and a current value actually measured from the target battery. The temperature prediction device 20b may include a storage device 25, a measuring device 26, and a control device 27.

The storage device 25 may store various data, information, etc. processed by the temperature prediction device 20b. The storage device 25 may store system environment data (e.g., shape information, thermal conductivity, convective heat transfer coefficient, etc.) related to heat transfer of the target battery. The storage device 25 may store a dimensionless number corresponding to the target battery. The storage device 25 may store a temperature prediction model. The temperature prediction model may be an artificial neural network model that has been trained in the temperature prediction model construction device 10a or 10b described above. The temperature prediction model may be constructed by the temperature prediction model construction device 10a or 10b and then stored in the storage device 21 by one or more methods (e.g., replication, download, etc.).

The measuring device 26 may measure a charge/discharge current of the target battery, a temperature of at least one point of the target battery, an external temperature of the target battery, and the like. The measuring device 26 may transmit the measured current value, temperature value, and the like to the control device 27.

The control device 27 may control the overall operation of the temperature prediction device 20b. The control device 27 may predict a temperature change of the target battery in advance by using the current measurement value, the temperature measurement value measured through the measuring device 26, and the temperature prediction model.

The control device 27 may include a data acquisition unit 271, a dimensionless conversion unit 272, a prediction unit 273, an inverse conversion unit 274, and a control unit 275.

The data acquisition unit 271 may acquire the current value and the current temperature value of the target battery measured by the measuring device 26, and the external temperature value of the target battery. The data acquisition unit 271 may calculate a current heat generation value of the target battery from the current value of the target battery using Joule's law or the like.

The dimensionless conversion unit 272 may dimensionless process the original data set (e.g., the current temperature value and current heat generation value) acquired by the data acquisition unit 271. The dimensionless conversion unit 272 may convert the current heat generation value of the target battery into a dimensionless heat generation value using Equation 1. The dimensionless conversion unit 272 may generate dimensionless numbers from the system environment data using Equation 2. The dimensionless number may be calculated in advance in the manufacturing step of the target battery and stored in the storage device 25. In this case, the process of calculating the dimensionless number may be omitted. The dimensionless conversion unit 272 may convert the current temperature value of the target battery into a dimensionless temperature value using Equation 3. In this case, in Equation 3, the initial temperature value T₀ may be inputted as the current temperature value of the target battery, and the external temperature value T_{∞} may be inputted as the external temperature value of the target battery measured by the measuring device 26.

The prediction unit 273 may obtain a dimensionless prediction temperature value by inputting a dimensionless data set (e.g., a dimensionless heat generation value, a dimensionless temperature value, and/or a dimensionless number) to the temperature prediction model. In some embodiments, the dimensionless prediction temperature value output from the temperature prediction model may be a value that predicts the temperature of the target battery after an identified or a predetermined time elapses from the current time point.

The inverse conversion unit 274 may re-dimensionalize the dimensionless prediction temperature value predicted and output by the temperature prediction model to output a predicted temperature value of the target battery. The re-dimensionalization may restore the original measurement dimension or unit to the dimensionless prediction temperature value.

The control unit 275 may control whether to perform a protection operation (e.g., charging blocking, warning signal output, etc.) of the target battery based on the predicted temperature value of the target battery. For example, if the predicted temperature value of the target battery is above a threshold, the control unit 275 may determine that the target battery exhibits abnormal heat transfer and may output a warning signal to a higher system (e.g., a vehicle controller, etc.). In some embodiments, an aspect of the target battery is modified based on the predicted temperature value. The aspect that may be modified may be charging and/or discharging of the target battery. For example, the control unit 275 may block the charging and/or discharging of the target battery to protect the target battery from thermal runaway when the predicted temperature value of the target battery is greater than or equal to a threshold. In this regard, the control unit 275 may open a blocking device (e.g., a relay or contactor) connected between the target battery and an external device (for example, load or charging device), for blocking the electrical connection between the target battery and the external device.

In the temperature prediction device 20b, the control device 27 may include at least one processor for performing at least one function of the data acquisition unit 271, the dimensionless conversion unit 272, the prediction unit 273, the inverse conversion unit 274, and the control unit 275. The storage device 25 may include at least one memory including, for example, a flash memory, hard disk, memory card, (e.g., SD or XD memory), random access memory RAM, static random-access memory SRAM, read-only memory ROM, electrically erasable programmable read-only memory EPROM, and/or programmable read-only memory PROM.

In the embodiments of FIGS. 1 to 5, a case where the temperature prediction model construction device 10 and the temperature prediction device 20 are implemented as mutually independent devices is illustrated as an example. However, the temperature prediction model construction device 10 and the temperature prediction device 20 may be integrated into one device. In this case, the functions of the temperature prediction model construction device 10 and the temperature prediction device 20 described above may be performed by a single control device.

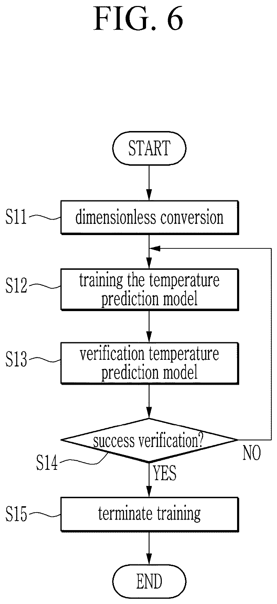

Hereinafter, a method of predicting a battery temperature in the battery temperature prediction system of FIG. 1 will be described in detail with reference to FIGS. 6 to 9.

The battery temperature prediction system 1 may first construct an artificial neural network-based temperature prediction model for predicting a battery temperature.

FIG. 6 depicts a flow diagram of a method for constructing a temperature prediction model according to one embodiment. The method of FIG. 6 may be performed by the control device 13 of the temperature prediction model construction device 10a described with reference to FIG. 2.

Referring to FIG. 6, the temperature prediction model construction device 10a may obtain dimensionless data sets by dimensionless conversion of the original data sets collected to construct the temperature prediction model (S11). One or more (e.g., each) original data set may include heat generation data, temperature data, and system environment data of a corresponding sample battery. The system environment data may include shape information of the corresponding sample battery, initial temperature, external temperature, thermal conductivity, convective heat transfer coefficient, and the like. The temperature prediction model construction device 10a may obtain dimensionless heat generation data by performing dimensionless conversion on the heat generation data of the original data set. The temperature prediction model construction device 10a may obtain dimensionless temperature data by performing dimensionless conversion on the temperature data of the original data set. The temperature prediction model construction device 10a may obtain at least one dimensionless number by performing dimensionless conversion on the system environment data.

The temperature prediction model construction device 10a may select some of the dimensionless data sets acquired through step S11 as a learning data set and train the temperature prediction model using the selected learning data sets (S12). The temperature prediction model may be configured to predict and output a dimensionless temperature value at a next point in time when a dimensionless heat generation value and a dimensionless temperature value corresponding to a current point in time and at least one dimensionless number are input. A temperature prediction model construction device 10a inputs dimensionless heat generation values, dimensionless temperature values, and dimensionless numbers of one or more (e.g., each) learning data set into a temperature prediction model in chronological order, compares dimensionless prediction temperature values output from the temperature prediction model in response thereto with dimensionless temperature values included in the learning data set, and updates the temperature prediction model so that a predicted loss calculated as a result of the comparison converges within an identified or a predetermined range, thereby allowing the temperature prediction model to be trained by repeating the process.

The temperature prediction model construction device 10a may perform a verification process of the learned temperature prediction model (S13). The temperature prediction model construction device 10a may select some of the dimensionless data sets acquired through step S11 as a verification data set and verify the prediction performance of the temperature prediction model using the selected verification data sets. The temperature prediction model construction device 10a may input one or more (e.g., each) verification data set to the temperature prediction model, compare the dimensionless prediction temperature value output from the temperature prediction model with the dimensionless temperature value included in the verification data set to calculate a prediction loss, and verify the prediction performance of the temperature prediction model based on the calculated prediction loss.

When the temperature prediction model construction device 10a successfully validates the temperature prediction model S14, it may terminate the training of the temperature prediction model and store the validated temperature prediction model in the internal storage device 11 S15. If the temperature prediction model construction device 10a fails to validate the temperature prediction model S14, it may reselect the learning data set to train the temperature prediction model S12 and reselect the verification data set to validate the trained temperature prediction model S13 repeatedly until the validation of the temperature prediction model is successful.

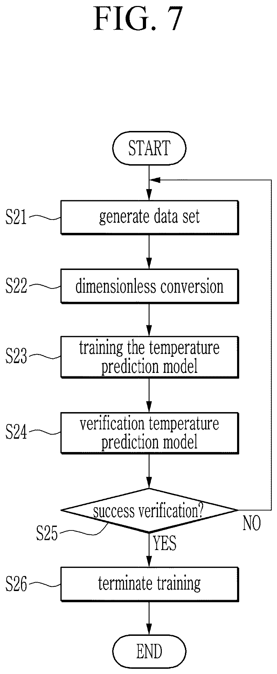

FIG. 7 depicts another flow diagram of a method for constructing a temperature prediction model according to an embodiment. The method of FIG. 7 may be performed by the control device 13 of the temperature prediction model construction device 10b described with reference to FIG. 3.

Referring to FIG. 7, the temperature prediction model construction device 10b may generate data sets (original data sets) to construct a temperature prediction model (S21). One or more (e.g., each) original data set may include heat generation data, temperature data, and system environment data of a corresponding sample battery. The temperature prediction model construction device 10b may acquire as heat generation data of the sample battery based on at least one driving data (e.g., current profile, charge/discharge state profile, etc.). The temperature prediction model construction device 10b may generate one or more (e.g., each) driving data based on information input through the user input device 12, or may randomly generate driving data. In the latter case, the temperature prediction model construction device 10b may use a Latin hypercube sampling method to generate driving data such that the current change pattern of the current profiles has a uniform distribution within a given range. The temperature prediction model construction device 10b may convert one or more (e.g., each) current value included in one or more (e.g., each) driving data into a heat generation value using Joule's law or the like and match one or more (e.g., each) heat generation value with a corresponding time index to generate heat generation data, which is time series data. The temperature prediction model construction device 10b may generate system environment data based on information input through the user input device 12. The temperature prediction model construction device 10b may generate temperature data of the sample battery by simulation or numerical analysis of heat transfer of the sample battery based on the heat generation data and the system environment data of the sample battery.

The temperature prediction model construction device 10b, through step S21, may obtain dimensionless data sets by dimensionless conversion of the original data sets generated (S22). One or more (e.g., each) dimensionless data set may include dimensionless heat generation data, dimensionless temperature data, and at least one dimensionless number.

The temperature prediction model construction device 10b may select some of the dimensionless data sets acquired through step S22 as a learning data set and train the temperature prediction model using the selected learning data set S23.

The temperature prediction model construction device 10b may select some of the dimensionless data sets acquired through step S22 as a verification data set, and verify the prediction performance of the temperature prediction model using the selected verification data sets (S24).

When the temperature prediction model construction device 10b successfully validates the temperature prediction model S25, it may terminate the training of the temperature prediction model and store the validated temperature prediction model in the internal storage device 11 S26. When the verification of the temperature prediction model fails S25, the temperature prediction model construction device 10b may regenerate the original data sets until the verification of the temperature prediction model is successful S21, process the re-generated original data sets in a dimensionless manner S22, select some of the re-generated dimensionless data sets as learning data sets, train the temperature prediction model S23, and repeatedly perform the processes of verifying the learned temperature prediction model S24 by selecting some of the re-generated dimensionless data sets as verification data sets.

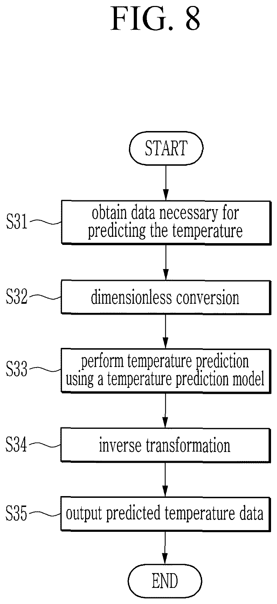

FIG. 8 depicts a flow diagram of a temperature prediction method according to one embodiment. The method of FIG. 8 may be performed by the control device 24 of the temperature prediction device 20a described with reference to FIG. 4.

Referring to FIG. 8, the temperature prediction device 20a may obtain data for predicting the temperature of the target battery based on information input through the user input device 22 S31. The temperature prediction device 20a may generate driving data (e.g., current profile, charge state profile, etc.) and system environment data (e.g., shape information of the target battery, initial temperature, external temperature, internal thermal conductivity, heat transfer coefficient, etc.) of the target battery based on information input through the user input device 22. The temperature prediction device 20a may generate heat generation data of the target battery from driving data using Joule's law or the like.

The temperature prediction device 20a may perform dimensionless conversion using the data acquired through step S31 to obtain dimensionless heat generation data, dimensionless initial temperature value, and at least one dimensionless number S32. The temperature prediction device 20a may convert the heat generation data obtained through step S31 into dimensionless heat generation data. The temperature prediction device 20a may generate at least one dimensionless number from system environment data obtained through step S31. The temperature prediction device 20a may obtain a dimensionless initial temperature value from the initial temperature of the target battery obtained through step S31.

The temperature prediction device 20a may perform temperature prediction of the target battery using the dimensionless processed data and a temperature prediction model S33. The temperature prediction device 20a may obtain dimensionless prediction temperature data (e.g., dimensionless temperature profile) by inputting a dimensionless heat generation value, a dimensionless temperature value, and at least one dimensionless number to the temperature prediction model. The dimensionless heat generation value input to the temperature prediction model may be selected in chronological order among dimensionless heat generation values of dimensionless heat generation data obtained through step (S32). As for the dimensionless temperature value input to the temperature prediction model, the dimensionless initial temperature value obtained through step S32 is used at the initial input, and then the dimensionless prediction temperature value predicted by the temperature prediction model may be fed back and used.

The temperature prediction device 20a may obtain predicted temperature data of the target battery by performing inverse conversion (re-dimensionalization conversion) on the dimensionless prediction temperature data output from the temperature prediction model S34. The temperature prediction device 20a may re-dimensionalize the dimensionless prediction temperature values output from the temperature prediction model into predicted temperature values having original units (e.g., Kelvin[K] values), and align the converted predicted temperature values in chronological order to generate predicted temperature data of the target battery.

When the temperature prediction is completed, the temperature prediction device 20a may output the predicted temperature data of the target battery on the screen through the display device 23 S35.

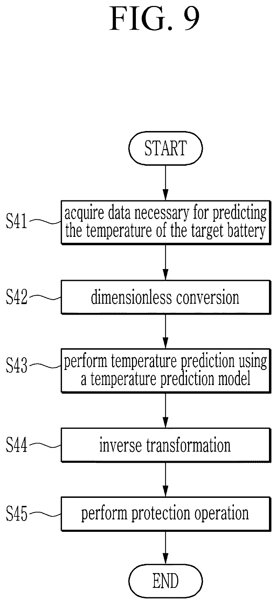

FIG. 9 depicts another flow diagram of a temperature prediction method according to one embodiment. The method of FIG. 9 may be performed by the control device 27 of the temperature prediction device 20b described with reference to FIG. 5.

Referring to FIG. 9, the temperature prediction device 20b may acquire data for predicting the temperature of the target battery S41. The temperature prediction device 20b may obtain the current value and the current temperature value of the target battery measured by the measuring device 26, and the external temperature value of the target battery. The temperature prediction device 20b may calculate a current heat generation value of the target battery from the current value of the target battery using Joule's law or the like.

The temperature prediction device 20b may obtain a dimensionless data set (a dimensionless heat generation value, a dimensionless temperature value) by performing dimensionless conversion in step S42 using the data acquired through step S41. The temperature prediction device 20b may convert a current heat generation value of the target battery into a dimensionless heat generation value. The temperature prediction device 20b may convert a current temperature value of the target battery into a dimensionless temperature value. The temperature prediction device 20b may generate at least one dimensionless number using system environment data. The dimensionless number may be calculated in advance in the manufacturing step of the target battery and stored in the storage device 25. In this case, the process of calculating the dimensionless number may be omitted.

The temperature prediction device 20b may perform temperature prediction of the target battery using the dimensionless data set (e.g., dimensionless heat generation value, dimensionless temperature value, and/or at least one dimensionless number) obtained through step S42 and the temperature prediction model S43. The temperature prediction device 20b may obtain a dimensionless prediction temperature value by inputting a dimensionless data set (e.g., a dimensionless heat generation value, a dimensionless temperature value, and/or a dimensionless number) to the temperature prediction model. In this case, the dimensionless prediction temperature value output from the temperature prediction model may be a value that predicts the temperature of the target battery after an identified or a predetermined time elapses from the current time point.

The temperature prediction device 20b may obtain a predicted temperature value of the target battery by performing inverse conversion (re-dimensionalization conversion) on the dimensionless prediction temperature value output by the temperature prediction model through step S44.

The temperature prediction device 20b may perform a protection operation (e.g., charge/discharge blocking, warning signal output, etc.) of the target battery in step S45 based on the predicted temperature value of the target battery obtained through step S44. When the predicted temperature value of the target battery is greater than or equal to a threshold, the temperature prediction device 20b may determine that the target battery exhibits abnormal heat transfer and output a warning signal to a higher system (e.g., a vehicle controller, etc.). The temperature prediction device 20b may block charging and discharging of the target battery in order to protect the target battery from thermal runaway when the predicted temperature value of the target battery is greater than or equal to a threshold value.

In the above-described embodiments, a temperature prediction model is constructed using dimensionless data sets from which the influence of the unit is removed. Therefore, it is possible to predict temperature using the same temperature prediction model for batteries with different system environmental variables (e.g., shape, external temperature, thermal conductivity, convective heat transfer coefficient, etc.), reducing computational load and reducing the time required to build a temperature prediction model compared to building a temperature prediction model using international unit system SI data sets.

Although one or more embodiments have been described above with references to the drawings, this invention is not limited thereto, and various modifications and modifications can be made within the equal range of the technical spirit of this invention and the claims to be described below by those of ordinary skill in the art.

## Claims

1. A system comprising:
a storage device (11, 21, 25) configured to store a plurality of first data sets related to heat transfer of at least one battery; and
a control device (13, 24, 27) configured to generate a plurality of second data sets by performing dimensionless conversion on the plurality of first data sets, and train an artificial neural network-based temperature prediction model based on the plurality of second data sets, wherein temperature of a target battery is predicted based on the artificial neural network-based temperature prediction model, and an aspect of the target battery is modified based on the temperature.

2. The system according to claim 1, wherein:
at least one of the plurality of first data sets includes at least one of heat generation data, temperature data, or system environment data of the at least one battery; and
at least one of the plurality of second data sets comprises at least one of dimensionless heat generation data, dimensionless temperature data, or a dimensionless number.

3. The system according to claim 1 or 2, wherein:
the control device (13) is further configured to generate the heat generation data based on a current profile, optionally wherein the control device (13) is further configured to:
perform numerical analysis or simulation of the at least one battery based on the heat generation data of the at least one battery; and
generate the temperature data via the numerical analysis or the simulation.

4. The system according to claim 3, wherein:
the control device (13) is further configured to generate the plurality of first data sets by modifying the current profile via random sampling.

5. The system according to any of claims 2 to 4, wherein:
the control device (13, 24, 27) is further configured to generate the dimensionless number based on the system environment data;
the system environment data comprises at least one of internal thermal conductivity, surface convection heat transfer coefficient, external temperature, or shape information of the at least one battery; and
the dimensionless number includes a Biot Number.

6. A system comprising:
a storage device (21, 25) configured to store a temperature prediction model based on an artificial neural network; and
a control device (24, 27) configured to obtain a first dimensionless heat generation value and a first dimensionless temperature value by performing dimensionless conversion on a heat generation value and a temperature value of a battery at a first time point, obtain a first dimensionless prediction temperature value at a second time point by inputting the first dimensionless heat generation value and the first dimensionless temperature value into the temperature prediction model, and determine a first prediction temperature value at the second time point by performing conversion on the first dimensionless prediction temperature value to an original dimension, wherein an aspect of a target battery is modified based on the first prediction temperature value.

7. The system according to claim 6, wherein:
the control device (24, 27) is further configured to obtain the heat generation value based on a current profile of the battery.

8. The system according to claim 8, wherein the control device (24) is further configured to:
based on the current profile, obtain a plurality of time indexes defined at identified time intervals and a plurality of heat generation values corresponding to the plurality of time indexes;
obtain a plurality of dimensionless heat generation values by performing dimensionless conversion on the plurality of heat generation values;
sequentially input the plurality of dimensionless heat generation values into the temperature prediction model to obtain a plurality of dimensionless prediction temperature values corresponding to the plurality of time indexes; and
generate a prediction temperature profile of the battery by performing conversion on the plurality of dimensionless prediction temperature values to an original dimension, optionally wherein:
the control device (24) is further configured to obtain a second dimensionless prediction temperature value at a third time point by inputting a second dimensionless heat generation value and a second dimensionless temperature value at the second time point into the temperature prediction model, and determine a second prediction temperature value at the third time point by performing conversion on the second dimensionless prediction temperature value to the original dimension;
the second dimensionless temperature value is the first dimensionless prediction temperature value; and
based on the first time point being an initial time point, the first dimensionless temperature value corresponds to an initial temperature of the battery.

9. The system according to claim 7 or 8, further comprising a measuring device (26) configured to measure current and temperature of the battery,
wherein the control device (27) is further configured to determine the heat generation value based on the current measured at the first time point.

10. The system according to any of claims 7 to 9, wherein:
the control device (24, 27) is further configured to obtain at least one dimensionless number input to the temperature prediction model from system environment data of the battery.

11. A method of predicting temperature of a battery comprising:
obtaining a first dimensionless heat generation value and a first dimensionless temperature value by performing dimensionless conversion on a heat generation value and a temperature value of the battery at a first time point;
obtaining a first dimensionless prediction temperature value at a second time point by inputting the first dimensionless heat generation value and the first dimensionless temperature value into an artificial neural network-based temperature prediction model; and
determining a first prediction temperature value at the second time point by performing conversion on the first dimensionless prediction temperature value to an original dimension, wherein an aspect of a target battery is modified based on the first prediction temperature value.

12. The method of predicting temperature according to claim 11, further comprising:
obtaining the heat generation value based on a current profile of the battery, optionally wherein further comprising:
obtaining a second dimensionless prediction temperature value at a third time point by inputting a second dimensionless heat generation value and a second dimensionless temperature value at the second time point into the temperature prediction model; and
determining a second prediction temperature value at the third time point by performing conversion on the second dimensionless prediction temperature value to the original dimension,
wherein the second dimensionless temperature value is the first dimensionless prediction temperature value, and
wherein based on the first time point being an initial time point, the first dimensionless temperature value corresponds to an initial temperature of the battery, optionally wherein further comprising:
determining the heat generation value based on a current value measured from the battery at a first point in time.

13. The method of predicting temperature according to claim 11 or 12, further comprising:
generating a plurality of second data sets by performing dimensionless conversion on a plurality of first data sets related to heat transfer of at least one sample battery; and
training the temperature prediction model based on the plurality of second data sets,
wherein at least one of the plurality of first data sets includes at least one of heat generation data, temperature data, and system environment data of a corresponding sample battery, and
wherein at least of the plurality of second data sets includes at least one of dimensionless heat generation data, dimensionless temperature data, or dimensionless number, optionally wherein further comprising:
generating the heat generation data based on a current profile of at least one sample battery; and
generating the temperature data by performing numerical analysis or simulation of the at least one sample battery based on the heat generation data of the at least one sample battery.

14. The method of predicting temperature according to claim 13, further comprising generating the dimensionless number based on the system environment data,
wherein the system environment data includes at least one of internal thermal conductivity, surface convection heat transfer coefficient, external temperature, or shape information of the at least one sample battery, and
wherein the dimensionless number includes a Biot number.

15. The method of predicting temperature according to any of claims 11 to 14, further comprising:
displaying the first prediction temperature value on a screen.
